# EUROPEAN PATENT SPECIFICATION

(11) **EP 4 380 775 B1**
(45) Date of publication and mention of the grant of the patent: **07.10.2026**
(21) Application number: 22758591.6
(22) Date of filing: 02.08.2022
(51) Int. Cl.: B29C 48/27, B29C 48/69, B29B 17/02, B29C 48/255, B01D 29/075, B01D 29/94, B01D 29/54, B01D 29/64, B29B 7/58

(54) **FILTERING DEVICE FOR PLASTIC MATERIALS WITH CLEANING SYSTEM**
FILTERVORRICHTUNG FÜR KUNSTSTOFFE MIT REINIGUNGSSYSTEM
DISPOSITIF DE FILTRATION POUR MATIÈRES PLASTIQUES AVEC SYSTÈME DE NETTOYAGE

(30) Priority: 06.08.2021 IT 202100021380
(43) Date of publication of application: 12.06.2024
(73) Proprietor: Break Machinery Srl, 35010 Grantorto (PD) (IT); Sartori, Alessandro, 36100 Vicenza (IT)
(72) Inventor: SARTORI, Alessandro, 36100 Vicenza (IT)
(74) Representative: Rocchetto, Elena
(86) International application number: PCT/IB2022/057152
(87) International publication number: WO 2023/012656

(56) References cited:
- EP-A2- 3 088 157
- CN-B- 105 729 757
- CN-U- 205 467 218
- DE-U1- 202019 102 066
- US-A- 4 657 636
- US-A- 5 078 275
- US-A- 5 643 450
- US-B1- 6 227 380
- US-B1- 6 378 705

## Description

The present patent concerns systems for filtering plastic materials in the molten state, more specifically systems for filtering plastic materials in the molten state during plastic recycling processes.

More specifically, the present patent concerns the cleaning system of filtering devices for plastic materials in the molten state, in particular the systems for filtering plastic materials in the molten state during plastic recycling processes.

The problem of the recovery/recycling of plastic materials for reuse in the manufacture of new products is known and particularly felt.

The plastic material to be recycled is subjected to a melting process and at the same time filtered to eliminate any impurities. Typically, the molten and filtered material is then properly processed to make, for example, a granular product suited to be reintroduced in the known plastic production processes.

A device of the known type as disclosed for example in US 5 643 450 A, US 6 227 380 B1 and US 6 378 705 B1 that carries out the filtration of raw plastic material in the molten state is provided with a cylindrical filtration chamber equipped with one or more filtering elements interposed between a feeding inlet for the raw plastic material to be filtered and an outlet, downstream of the filtering elements, for the discharge of the filtered molten plastic material. Filtration chambers of the known type comprise a first part with closed bottom, preferably a cylindrical first part with closed bottom, and a cover which is associated with the mouth of the first part. When the cover is associated with/fixed to the mouth of the first part, the filtration chamber is closed, and the filtering device is ready for use. The cover is preferably fixed to the first part by means of screws and nuts that can be conveniently unscrewed for normal maintenance operations and/or repairs.

According to the known technique, the raw plastic material in the molten state is introduced in the filtration chamber and conveyed, under pressure, through filtering elements typically constituted by substantially planar (or cylindrical) filters provided with filtering through openings properly sized and suited to ensure the desired filtering capacity.

During operation with continuous feeding of raw material, impurities tend to gradually accumulate on the surface of the filter. Therefore, a cleaning system located inside the filtration chamber is provided to ensure continuous cleaning of the surface of the filter.

According to the known technique, the cleaning system comprises at least one fixed or movable (preferably rotary) scraper provided with scraping elements that slide across the surface of the filter to remove the impurities that have accumulated thereon. At the same time, the removed impurities are conveyed out of the filtration chamber. The impurities collected by the scraping elements are preferably conveyed towards the centre of the filter along a curved path and from there, through a channel, conveyed outside by a worm screw/ screw feeder or an on/off valve that extends from the centre of the filter and exits from the filtration chamber.

According to a first known technique, the scraper and the screw feeder are set rotating together around a common rotation shaft conveniently driven by motorized means, usually an electric motor.

A drawback associated with the filtering devices of this type lies in that it is impossible to optimize and minimize the waste material as the rotation speed of the screw feeder and that of the scraper cannot be managed separately.

According to a second known technique, on the contrary, the scraper is fixed and the filtering elements are set rotating. In addition, an independent screw feeder is associated with each filtering element.

The drawbacks associated with this second known technique are the presence of only one scraper per filtering surface and the need for a screw feeder for each filtering surface.

In order to overcome the aforementioned drawbacks, a new type of filtering device for a plastic material in the molten state has been designed and constructed.

Therefore, it is an object of the invention to provide a filtering device for a plastic material that makes it possible to improve the degree of cleanliness of the filtering elements compared to the devices of the known type.

It is another object of the invention to provide a filtering device for a plastic material that makes it possible to minimize the waste of material by using a single, independent screw feeder.

The objects specified above are achieved by means of a filtering device for a plastic material according to the attached claim 1, to which reference is made for the sake of brevity.

In particular, according to a first aspect of the present invention, the same concerns a filtering device for a plastic material in the molten state, said filtering device comprising:
- a hollow body provided with a mouth and a cover suited to be associated with said mouth to define a filtration chamber;
- at least one inlet way for the introduction of said plastic material in the molten state in said filtration chamber and at least one outlet way for the outlet of said filtered plastic material in the molten state from said filtration chamber;
- a first filter and a second filter arranged side by side inside said filtration chamber in a position between said at least one inlet way and said at least one outlet way, said first filter being suited to define a first surface suited to filter said plastic material and collect any impurities and said second filter being suited to define a second surface suited to filter said plastic material and collect any impurities;
- a cleaning device arranged between said first filter and said second filter;
- an evacuation device suited to discharge said impurities collected by said cleaning device towards an evacuation outlet, said evacuation device being arranged centrally with respect to said cleaning device;
wherein said cleaning device comprises a rotary main body with a first side facing towards said first filter and provided with first scraping elements cooperating with said first filtering surface of said first filter and a second side facing towards said second filter and provided with second scraping elements cooperating with said second filtering surface of said second filter, said main body comprising a first plurality of axially symmetrical channels communicating with said first side and a second plurality of axially symmetrical channels communicating with said second side and suited to receive the impurities collected by said first scraping elements and said second scraping elements, respectively, and to convey them towards said evacuation device, said first plurality of axially symmetrical channels and said second plurality of axially symmetrical channels being defined in said main body staggered with respect to one another and arranged symmetrically with respect to the middle plane of said main body in such a way that said impurities pass through said first plurality of channels and said second plurality of channels along equal paths with the same flow rate and discharge said impurities in a balanced manner on said evacuation device through discharge openings arranged on said middle plane, guaranteeing the introduction of impurities in said evacuation device in completely equivalent positions.

Further specific operating characteristics of the device that is the subject of the present invention are illustrated in the corresponding dependent claims. The characteristics of the new device are illustrated in greater detail in the following description with reference to the drawings, which are attached hereto by way of non-limiting example.

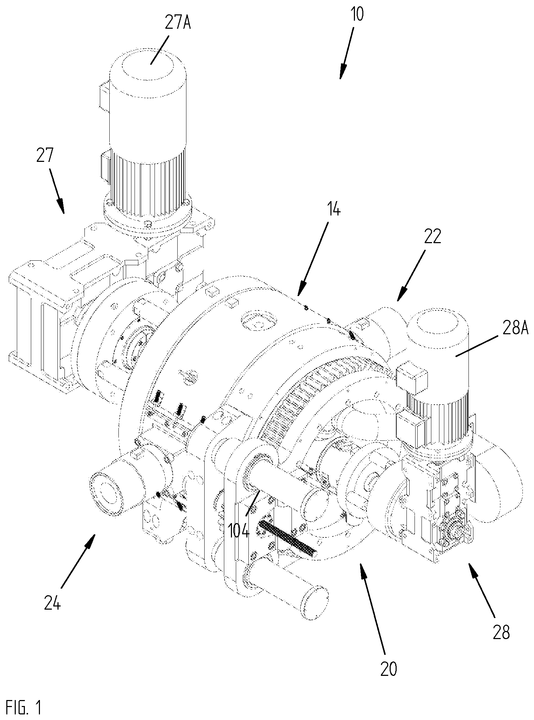

Figure 1 shows an axonometric view of a filtering device according to a preferred embodiment of the invention.
Figure 2 shows a sectional view of the filtering device shown in Figure 1 along a horizontal section plane.
Figure 2A shows an enlarged detail of Figure 2.
Figure 3 shows a sectional view of the filtering device shown in Figure 1 along a vertical section plane.

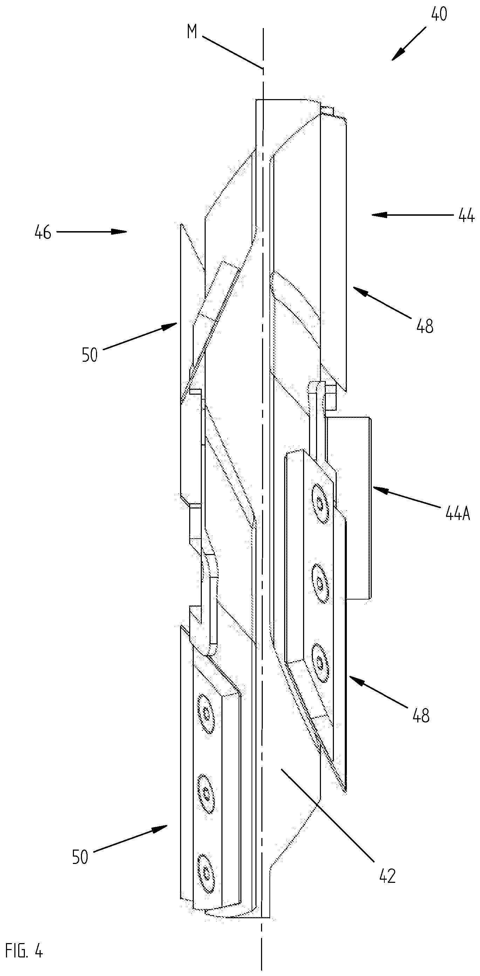

Figure 4 shows an enlarged detail of an element of Figure 2A isolated from the rest.
Figure 5 shows an axonometric view from a first side of the element shown in Figure 4.
Figure 5A shows an exploded view of Figure 5.
Figure 6 shows a second axonometric view from a second side of the element shown in Figure 4.
Figure 6A shows an exploded view of Figure 6.
Figure 7A shows a plan view of an element of Figure 5A.
Figure 7B shows a plan view of an element of Figure 6A.
Figure 8 shows a sectional view of the filtering device shown in Figure 1 along a vertical section plane passing through the inlet way for the introduction of the material.
Figure 9 shows a sectional view of a filtering device according to a variant embodiment of the invention.

A filtering device according to a preferred embodiment of the invention is indicated by the numeral 10 in Figures from 1 to 4.

The filtering device 10 according to the invention can be preferably used in a plastic recycling process.

The filtering device 10 has the function of filtering/stopping the impurities present in the raw plastic material to be recycled in such a way as to obtain a degree of purity that depends on the size of the meshes of the filtering element used.

To carry out this filtration operation, the raw plastic material to be recycled is first heated and brought to the molten state so that it can then be conveyed into the filtering device 10, more specifically into a filtration chamber 12 of the device 10 itself.

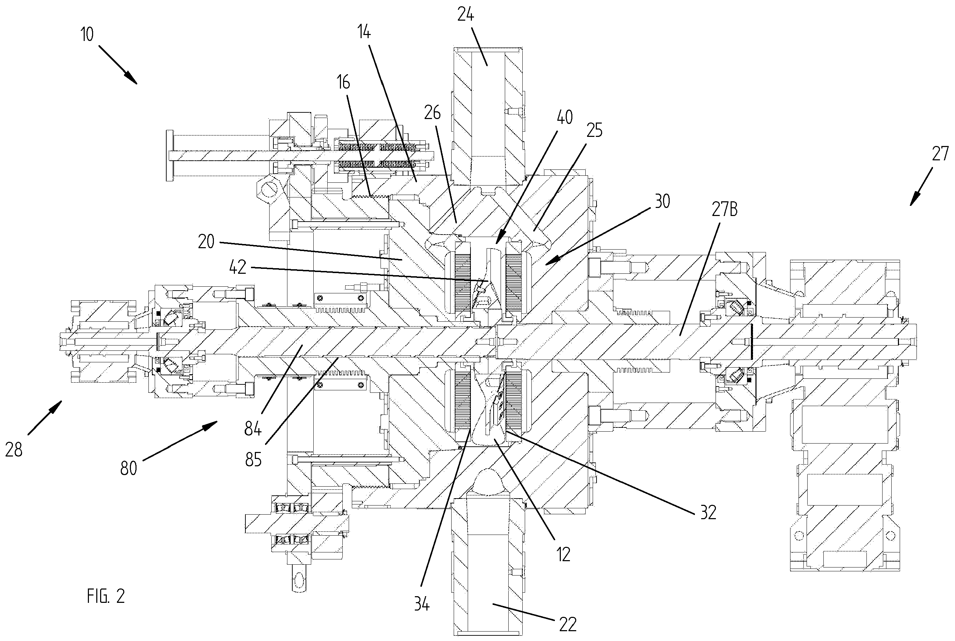

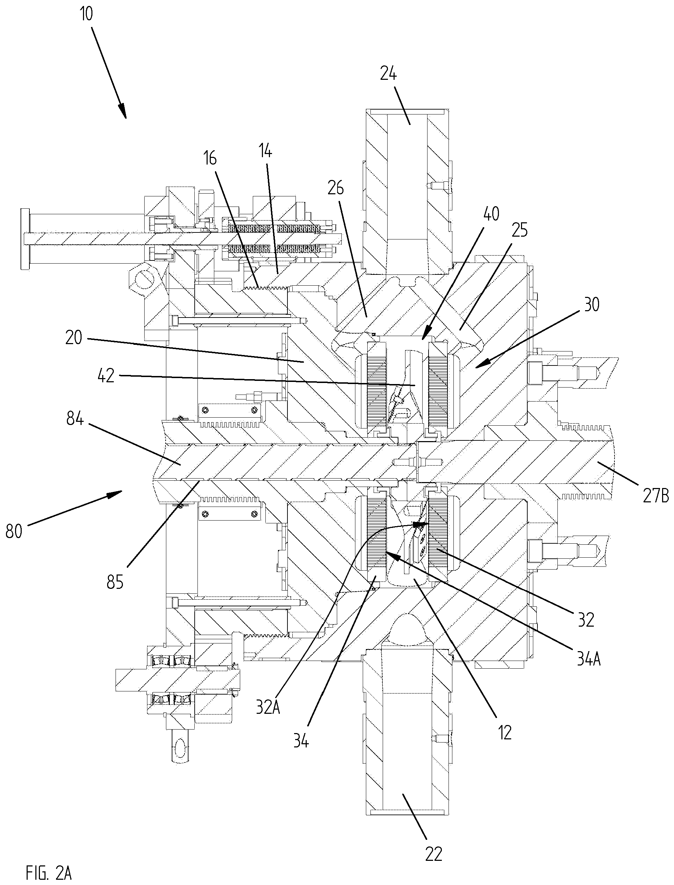

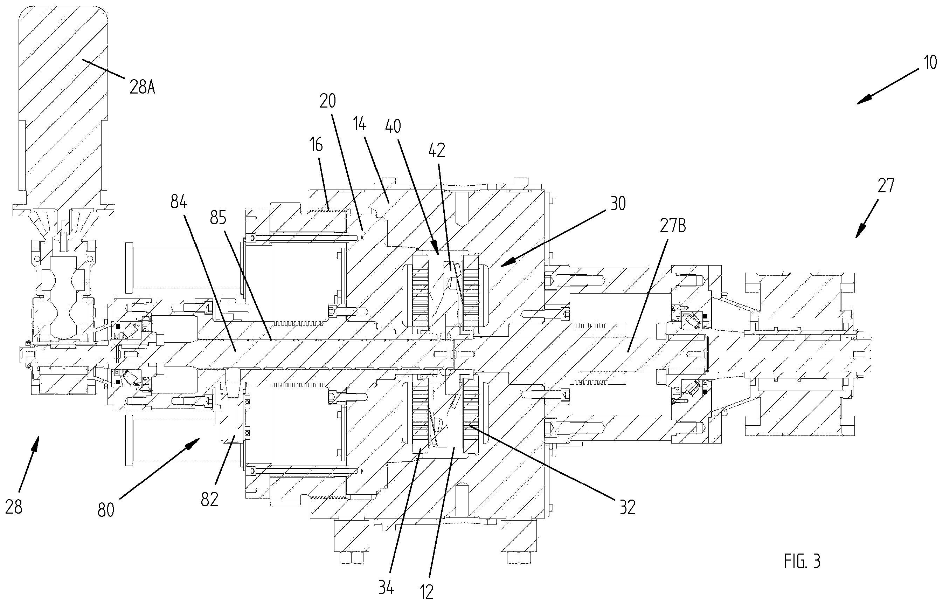

The filtering device 10 preferably has a hollow body 14 provided with a mouth 16 and a cover 20 suited to be associated with the mouth 16 to define the filtration chamber 12 (Figures 2, 3).

The hollow body 14 according to the preferred embodiment illustrated herein has a preferably cylindrical shape and the cover 20 consequently has a preferably circular cross-section.

An inlet way 22 is associated with the hollow body 14 so as to allow the introduction of the plastic material to be filtered in the molten state into the filtration chamber 12. An outlet way 24 is also associated with the hollow body 14 so as to allow the discharge of the filtered plastic material in the molten state from the filtration chamber 12.

Preferably, the inlet way 22 is associated with conveyor means, not shown and of a known type per se, suited to convey, under pressure, the material in the molten state to be filtered towards said inlet way 22.

Filtering means 30 are preferably arranged within the filtration chamber 12 in a position between the inlet way 22 and the outlet way 24.

According to an aspect of the present invention, the filtering means 30 comprise a first filter 32 and a second filter 34 arranged side by side in the filtration chamber 12 in a position between the inlet way 22 and the outlet way 24.

The first filter 32 and the second filter 34 preferably comprise two plane filtering discs arranged parallel to each other. In variant embodiments, the shape can be different and follow the internal shape of the filtration chamber. The first filter 32 defines a corresponding first filtering surface 32A suited to collect impurities during the filtration process and the second filter 34 defines a corresponding second filtering surface 34A suited to collect impurities during the filtration process (shown in Figure 2A). Two respective collection channels 25, 26 for the filtered material, which preferably join at the level of the final outlet way 24, are defined downstream of the two filters 32, 34.

The channels 25 and 26 follow equal and symmetrical paths to help obtain flows having the same flow rate and pressure.

A cleaning device 40, described in greater detail below, is preferably arranged between the first and the second filter 32, 34, wherein said cleaning device 40 has the function of cleaning the first filtering surface 32A of the first filter 32 and the second filtering surface 34A of the second filter 34.

Preferably, an evacuation device 80 is also provided, which is suited to convey the impurities collected by said cleaning device 40 towards an evacuation outlet 82, visible in Figure 3. The evacuation device 80 is preferably arranged centrally with respect to the cleaning device 40.

The evacuation device 80 preferably comprises an evacuation channel 85 which accommodates a rotary discharge element 84, preferably a worm screw or screw feeder, suited to receive the impurities collected in the filtration chamber 12 and move them along a longitudinal direction towards the evacuation outlet 82.

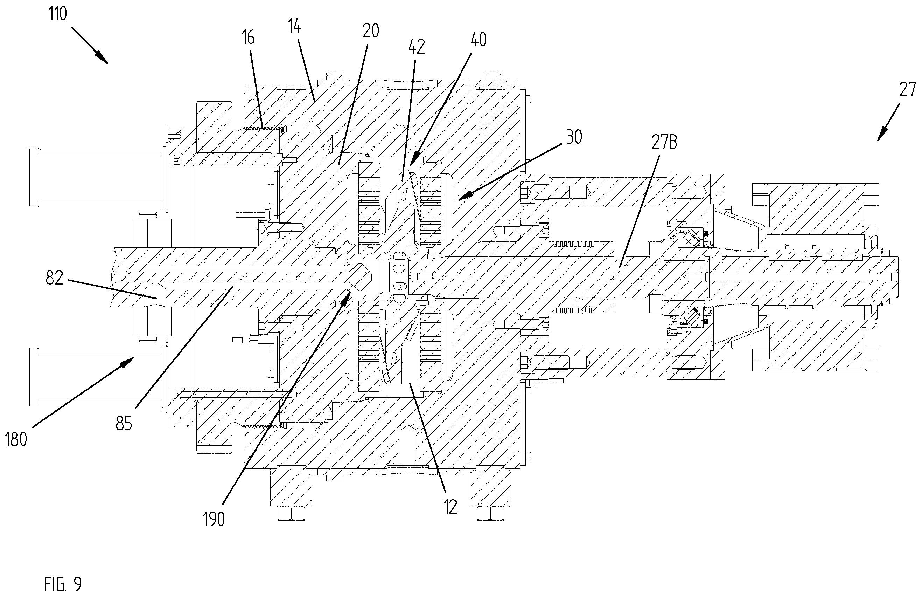

In a variant embodiment, shown in Figure 9 and described in greater detail below, the evacuation device 180 preferably comprises an evacuation channel 85 and an on/off valve 190 suited to open to allow the impurities collected in the filtration chamber 12 to move, under pressure, towards the evacuation outlet 82.

Suitable rotation means 28, preferably an electric motor 28A with controlled speed, allow the controlled rotation of the rotary discharge element 84 during the operation of the filtering device 10.

According to an aspect of the present invention, the cleaning device 40 comprises a rotary main body 42, preferably circular in shape, having a first side 44 facing towards the first filter 32 and a second side 46 facing towards the second filter 34. The first side 44 is provided with first scraping elements 48 cooperating with the first filtering surface 32A of the first filter 32 and the second side 46 is provided with second scraping elements 50 cooperating with the second filtering surface 34A of the second filter 34.

The rotary main body 42 can therefore be rotated around its own rotation axis while it is not axially constrained.

The first scraping elements 48 and/or the second scraping elements 50 preferably comprise scraping blades rigidly connected to the respective sides 44, 46 of the main body 42, more preferably flexible scraping blades suited to be placed in contact with the respective first filtering surface 32A of the first filter 32 and second filtering surface 34A of the second filter 34. The flexibility of the scraping blades 48, 50 allows them to be compressed by the two filters 32, 34 at the moment when the device 10 is closed by the cover 20 and the parts of the scraping blades 48, 50 in contact with the filtering surfaces 32A, 34A provide the pressure required to scrape and remove impurities from the surfaces 32A, 34A themselves. This is facilitated by the fact that the main body 42 is not axially constrained and therefore is centred due to the pressure provided by the scraping blades 48, 50. The scraping blades 48, 50 are preferably arranged symmetrically on the two sides 44, 46 of the main body 42 with respect to the middle plane M of the main body 42 itself. Advantageously, the scraping blades 48, 50 deform substantially in the same manner on both sides 44, 46 of the main body 42 and thus exert the same pressure on the surfaces 32A, 34A of the filters 32, 34, ensuring better filtration quality (same degree of cleanliness of the filters 32, 34) and regular and equivalent wear of the filters 32, 34 and/or of the scraping blades 48, 50. The scraping blades 48, 50 are fixed to the respective sides 44, 46 of the main body 42 by means of fixing screws.

According to the preferred embodiment illustrated, three scraping blades 48, 50 are provided for each side 44, 46. In variant embodiments, however, the number of said blades can be different.

Suitable rotation means 27 allow the controlled rotation of the rotary main body 42 during the operation of the filtering device 10.

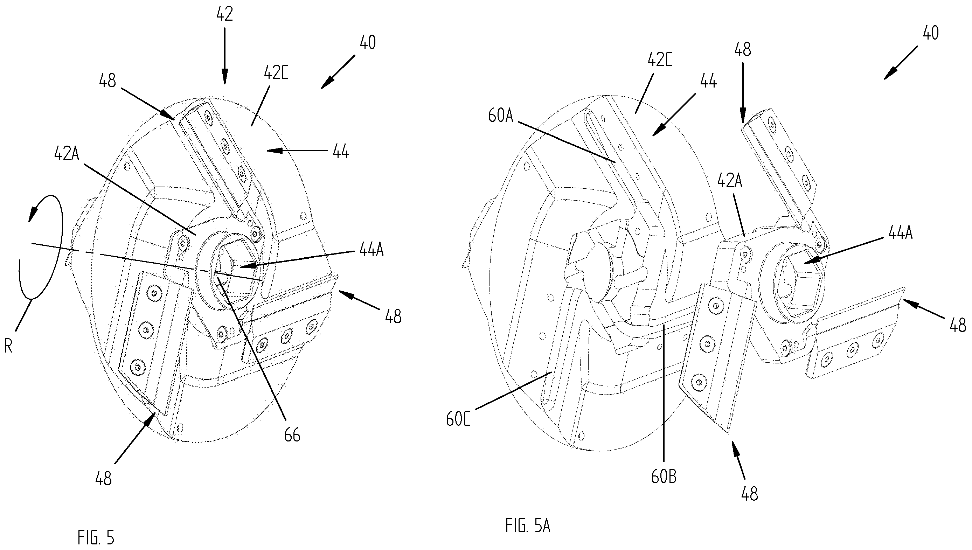

The rotation means 27 preferably comprise an electric motor 27A, more preferably with controlled speed, acting to rotate a drive shaft 27B. The end of the drive shaft 27B engages with a corresponding seat 44A made centrally in the first side 44 of the main body 42 of the cleaning device 40 (better visible in Figures 5 and 5A).

The end of the drive shaft 27B and the corresponding seat 44A in the main body 42 preferably have a polygonal shape, more preferably a hexagonal shape.

According to another aspect of the present invention, the main body 42 comprises a first plurality of channels 60A, 60B, 60C communicating with the first side 44 and a second plurality of channels 70A, 70B, 70C communicating with the second side 46.

The first plurality of channels 60A, 60B, 60C is conveniently created in the main body 42 to receive the impurities collected by the first scraping elements 48 and to convey them centrally towards the evacuation device 80, more preferably to convey them on the external surface of the rotary discharge element 84 or, in other cases, towards the evacuation device 180.

Analogously, the second plurality of channels 70A, 70B, 70C is conveniently created in the main body 42 to receive the impurities collected by the second scraping elements 50 and to convey them centrally towards the evacuation device 80, more preferably to convey them on the external surface of the rotary discharge element 84 or, in other cases, towards the evacuation device 180.

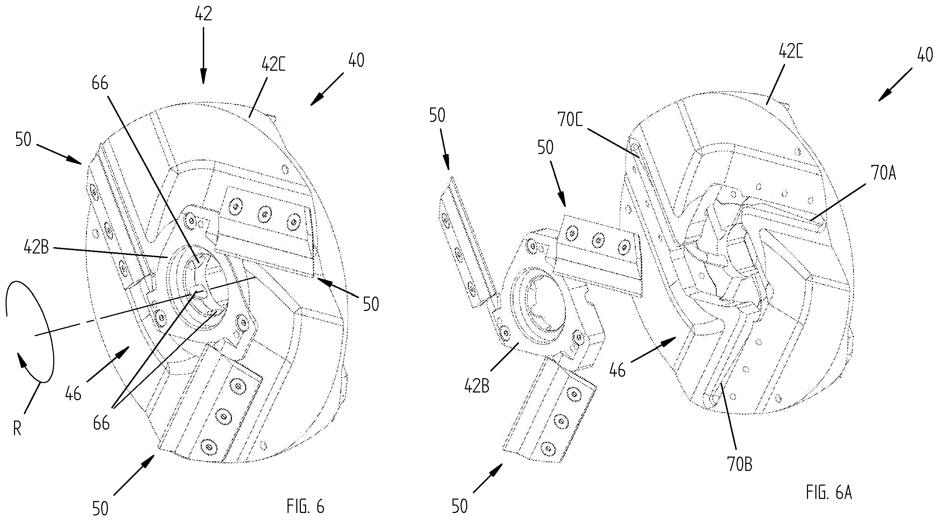

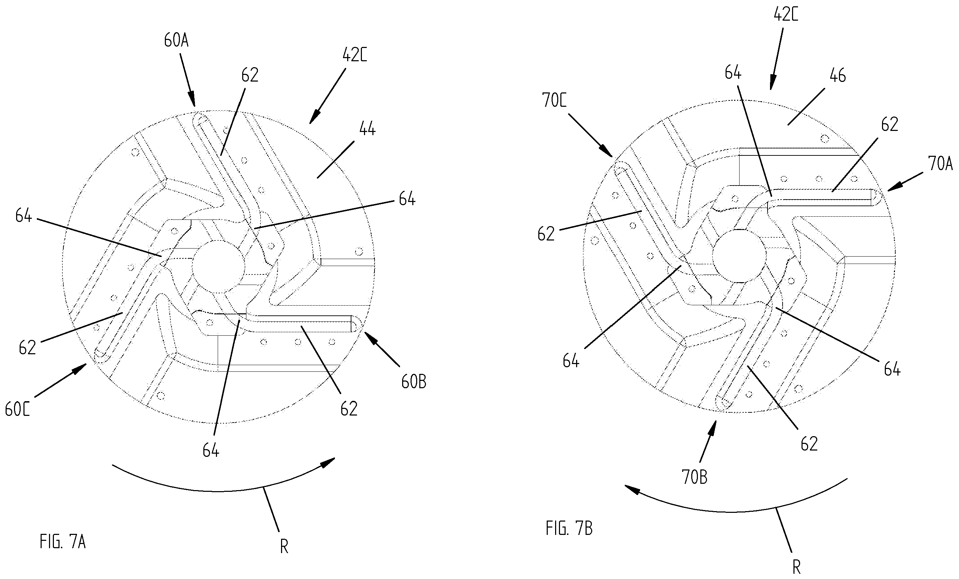

According to the preferred embodiment illustrated, there are therefore three axially symmetrical channels 60A, 60B, 60C associated with the corresponding three scraping blades 48 of the first side 44 (Figures 5A and 7A) and three axially symmetrical channels 70A, 70B, 70C associated with the corresponding three scraping blades 50 of the second side 46 (Figures 6A and 7B). In variant embodiments, however, the number of said channels can be different.

Preferably, the first plurality of channels 60A, 60B, 60C and the second plurality of channels 70A, 70B, 70C are defined in the main body 42 staggered with respect to one another and arranged symmetrically with respect to the middle plane M in such a way that the impurities pass through the first plurality of channels 60A, 60B, 60C and the second plurality of channels 70A, 70B, 70C along equal paths and discharge the impurities in an equivalent and balanced manner on the evacuation device 80.

Each channel 60A, 60B, 60C, 70A, 70B, 70C preferably comprises a first section 62 defined at the level of and below a respective scraping blade 48, 50 (see Figures 5A and 6A) and a second section 64 running through a corresponding discharge opening 66 and ending into an annular discharge chamber where the rotary discharge element 84 (screw feeder 84) is inserted. The first section 62 preferably comprises a straight section while the second section 64 is preferably curved so that it can reach the discharge opening 66. The channels 60A, 60B, 60C, 70A, 70B, 70C therefore preferably follow a non-radial pattern.

This pattern facilitates the flow of the impurities towards the discharge opening 66 considering the favourable direction of rotation of the cleaning device 40, indicated by R in the figures.

The discharge openings 66 of all the channels 60A, 60B, 60C, 70A, 70B, 70C, six openings 66 in the preferred embodiment illustrated, are arranged around the discharge chamber 68, equally spaced from each other, and they all lie in the middle plane M of the main body 42, guaranteeing the introduction of material with impurities in the evacuation device 80 in completely equivalent positions.

In this way, advantageously, it is possible to maintain equivalent and balanced flow rates through the channels 60A, 60B, 60C, 70A, 70B, 70C and to have corresponding equivalent and balanced pressures downstream of the two filters 32, 34.

Furthermore, preferably, the channels 60A, 60B, 60C, 70A, 70B, 70C have increasing cross section in the direction towards the evacuation device 80, so as to facilitate the outflow towards the discharge openings 66.

The embodiment according to the present invention therefore allows the cleaning device 40 to be constructed symmetrically, which makes it possible to maintain balanced and equivalent flow rates of the removed material coming from both filters 32, 34 by using only one evacuation device 80 or, in other cases, 180.

According to the illustrated embodiment, the rotary main body 42 comprises three modular parts 42A, 42B and 42C for ease of construction, disassembly and cleaning, which are shown in Figures 5A and 6A: two central parts 42A, 42B and an outer part 42C. The first rectilinear sections 62 of the first plurality of channels 60A, 60B, 60C (Figure 7A) are preferably defined on the first side 44 of the outer part 42C and the first rectilinear sections 62 of the second plurality of channels 70A, 70B, 70C (Figure 7B) are preferably defined on the second side 46 of the outer part 42C.

The solution therefore makes it possible to improve the degree of cleanliness of the filters 32, 34 and the filtration quality, using an evacuation system with a screw feeder 84 or an on/off valve 190.

According to the illustrated embodiment, furthermore, the rotary main body 42 and the rotary discharge element 84 are set rotating independently by means of the respective rotation means 27, 28. Advantageously, the respective rotation directions and the respective rotation speeds can be adjusted independently of each other and in such a way as to ensure that impurities are eliminated as efficiently as possible.

Preferably, when in operation, the rotary main body 42 and the rotary discharge element 84 rotate in the same direction. Furthermore, preferably, the rotation speed of the rotary discharge element 84 is higher than the rotation speed of the rotary main body 42 by such a value as to generate a tangential component of the speed of the material flowing out of the channels 66 concordant with the tangential speed of the rotary discharge element 84. In this way, the material exiting from the channels 66 comes into contact with the rotary discharge element 84 with good fluid dynamic efficiency.

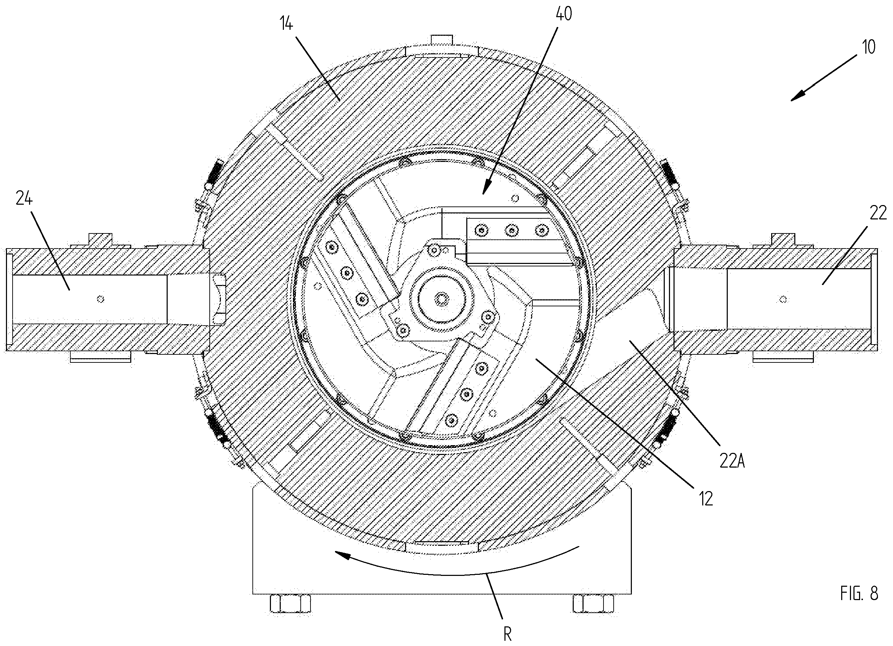

Another advantageous aspect lies in that the inlet way 22 is configured with an inclined inlet portion 22A (Figure 8) that is tangential to the inner diameter of the filtration chamber 12 so that the fluid rotates in a direction concordant with the rotation direction R of the cleaning device 40.

Figure 9 shows a variant embodiment of the filtering device 110 according to the invention. Component parts corresponding or equivalent to those of the first embodiment are identified by the same reference numerals.

Said embodiment differs from the previously described embodiment, as mentioned above, in that the evacuation device 180 preferably comprises an evacuation channel 85 and an on/off valve 190 suited to open and allow the impurities collected in the filtration chamber 12 to be moved towards the evacuation outlet 82 under the action of pressure. The evacuation device 180, therefore, is not equipped with the rotary discharge element (metering screw). The corresponding rotation means will therefore be omitted, too.

According to said embodiment, therefore, the impurities collected by the first and the second scraping elements 48, 50 are conveyed centrally towards the evacuation device 180 through the respective channels 60A, 60B, 60C, 70A, 70B, 70C and here, under the action of pressure, the on/off valve 190 opens to allow the impurities to move along the evacuation channel 85 and reach the evacuation outlet 82.

## Claims

1. Filtering device (10; 110) for a plastic material in the molten state, said filtering device (10; 110) comprising:
• a hollow body (14) provided with a mouth (16) and a cover (20) suited to be associated with said mouth (16) to define a filtration chamber (12);
• at least one inlet way (22) for the introduction of said plastic material in the molten state in said filtration chamber (12) and at least one outlet way (24) for the outlet of said filtered plastic material in the molten state from said filtration chamber (12);
• a first filter (32) and a second filter (34) arranged side by side inside said filtration chamber (12) in a position between said at least one inlet way (22) and said at least one outlet way (24), said first filter (32) being suited to define a first surface (32A) suited to filter said plastic material and collect any impurities and said second filter (34) being suited to define a second surface (34A) suited to filter said plastic material and collect any impurities;
• a cleaning device (40) arranged between said first filter (32) and said second filter (34);
• an evacuation device (80; 180) suited to discharge said impurities collected by said cleaning device (40) towards an evacuation outlet (82), said evacuation device (80; 180) being arranged centrally with respect to said cleaning device (40);
wherein said cleaning device (40) comprises a rotary main body (42) with a first side (44) facing towards said first filter (32) and provided with first scraping elements (48) cooperating with said first filtering surface (32A) of said first filter (32) and a second side (46) facing towards said second filter (34) and provided with second scraping elements (50) cooperating with said second filtering surface (34A) of said second filter (34), said main body (42) comprising a first plurality of axially symmetrical channels (60A, 60B, 60C) communicating with said first side (44) and a second plurality of axially symmetrical channels (70A, 70B, 70C) communicating with said second side (46) and suited to receive the impurities collected by said first scraping elements (48) and said second scraping elements (50), respectively, and to convey them towards said evacuation device (80; 180), said first plurality of axially symmetrical channels (60A, 60B, 60C) and said second plurality of axially symmetrical channels (70A, 70B, 70C) being defined in said main body (42) staggered with respect to one another and arranged symmetrically with respect to the middle plane (M) of said main body (42) in such a way that said impurities pass through said first plurality of channels (60A, 60B, 60C) and said second plurality of channels (70A, 70B, 70C) along equal paths with the same flow rate and discharge said impurities in a balanced manner on said evacuation device (80; 180) through said discharge openings (66) arranged on said middle plane (M), guaranteeing the introduction of impurities in said evacuation device (80; 180) in completely equivalent positions, **characterized in that**
said channels (60A, 60B, 60C, 70A, 70B, 70C) have discharge openings (66) arranged on said middle plane (M) of said main body (42).

2. Device (10; 110) according to claim 1, **characterized in that** said rotary main body (42) is composed by three modular parts (42A, 42B, 42C).

3. Device (10; 110) according to claim 1, **characterized in that** it comprises first rotation means (27) for rotating said main body (42) of said cleaning device (40).

4. Device (10) according to claim 1 or 3, **characterized in that** said evacuation device (80) comprises an evacuation channel (85) which houses a rotary discharge element (84), preferably a worm screw, suited to receive and move said impurities collected in said filtration chamber (12) along a longitudinal direction towards said evacuation outlet (82).

5. Device (10) according to claim 4, **characterized in that** it comprises second rotation means (28) for rotating said rotary discharge element (84).

6. Device (10) according to claim 4 or 5, **characterized in that** said main body (42) of said cleaning device (40) and said rotary discharge element (84) rotate in the same rotation direction, wherein the rotation speed of said rotary discharge element (84) is preferably higher than the rotation speed of said main body (42) by such a value as to generate a tangential component of the speed of the material flowing out of said discharge openings (66) that is consistent with the tangential speed of said rotary discharge element (84).

7. Device (10; 110) according to the preceding claims, **characterized in that** one or more channels of said first plurality of channels (60A, 60B, 60C) and/or of said second plurality of channels (70A, 70B, 70C) have increasing cross section towards said evacuation device (80; 180).

8. Device (10; 110) according to the preceding claims, **characterized in that** said first scraping elements (48) and/or said second scraping elements (50) comprise scraping blades, preferably flexible scraping blades, suited to be arranged in contact with said first filtering surface (32A) of said first filter (32) and/or with said second filtering surface (34A) of said second filter (34).

9. Device (10; 110) according to claim 8, **characterized in that** said flexible scraping blades (48) maintain said rotary main body (42) in an operating position centered between said first filter (32) and said second filter (34), wherein said rotary main body (42) is not constrained axially.

10. Device (10; 110) according to claim 1, **characterized in that** said evacuation device (180) comprises an evacuation channel (85) and an on/off valve (190) suited to open to allow the movement of said impurities collected in said filtration chamber (12) towards said evacuation outlet (82) under the action of pressure.

11. Device (10; 110) according to the preceding claims, **characterized in that** in the hollow body (14) closed by the cover (20) all the scraping elements (48, 50) are subjected to the same degree of compression.

## Patentansprüche

1. Filtervorrichtung (10; 110) für ein Kunststoffmaterial im geschmolzenen Zustand, wobei die besagte Filtervorrichtung (10; 110) Folgendes umfasst:
• einen Hohlkörper (14), der mit einer Mündung (16) und einem Deckel (20) versehen ist, der dazu geeignet ist, der besagten Mündung (16) zugeordnet zu werden, um eine Filterkammer (12) zu definieren;
• mindestens einen Einlassweg (22) für die Einleitung des besagten Kunststoffmaterials im geschmolzenen Zustand in die besagte Filterkammer (12) und mindestens einen Auslassweg (24) für den Auslass des besagten gefilterten Kunststoffmaterials im geschmolzenen Zustand aus der besagten Filterkammer (12);
• einen ersten Filter (32) und einen zweiten Filter (34), die nebeneinander innerhalb der besagten Filterkammer (12) in einer Position zwischen dem besagten mindestens einen Einlassweg (22) und dem besagten mindestens einen Auslassweg (24) angeordnet sind, wobei der besagte erste Filter (32) dazu geeignet ist, eine erste Fläche (32A) zu definieren, die dazu geeignet ist, das besagte Kunststoffmaterial zu filtern und Verunreinigungen zu sammeln, und der besagte zweite Filter (34) dazu geeignet ist, eine zweite Fläche (34A) zu definieren, die dazu geeignet ist, das besagte Kunststoffmaterial zu filtern und Verunreinigungen zu sammeln;
• eine Reinigungsvorrichtung (40), die zwischen dem besagten ersten Filter (32) und dem besagten zweiten Filter (34) angeordnet ist;
• eine Entleerungsvorrichtung (80; 180), die dazu geeignet ist, die besagten von der besagten Reinigungsvorrichtung (40) gesammelten Verunreinigungen zu einem Entleerungsauslass (82) abzuführen, wobei die besagte Entleerungsvorrichtung (80, 180) zentral in Bezug auf die besagte Reinigungsvorrichtung (40) angeordnet ist;
wobei die besagte Reinigungsvorrichtung (40) Folgendes umfasst: einen Drehhauptkörper (42) mit einer ersten Seite (44), die dem besagten ersten Filter (32) zugewandt ist und mit ersten Abstreifelementen (48) versehen ist, die mit der besagten ersten Filterfläche (32A) des besagten ersten Filters (32) zusammenwirken, und mit einer zweiten Seite (46), die dem besagten zweiten Filter (34) zugewandt ist und mit zweiten Abstreifelementen (50) versehen ist, die mit der besagten zweiten Filterfläche (34A) des besagten zweiten Filters (34) zusammenwirken, wobei der besagte Hauptkörper (42) Folgendes umfasst: eine erste Vielzahl von axialsymmetrischen Kanälen (60A, 60B, 60c), die mit der besagten ersten Seite (44) kommunizieren, und eine zweite Vielzahl von axialsymmetrischen Kanälen (70A, 70B, 70c), die mit der besagten zweiten Seite (46) kommunizieren und dazu geeignet sind, die von den besagten ersten Abstreifelementen (48) bzw. den besagten zweiten Abstreifelementen (50) gesammelten Verunreinigungen aufzunehmen und in Richtung der besagten Entleerungsvorrichtung (80; 180) zu befördern, wobei die besagte erste Vielzahl von axialsymmetrischen Kanälen (60A, 60B, 60c) und die besagte zweite Vielzahl von axialsymmetrischen Kanälen (70A, 70B, 70c) im besagten Hauptkörper (42) definiert sind und zueinander versetzt ausgebildet und symmetrisch zur Mittelebene (M) des besagten Hauptkörpers (42) angeordnet sind, derart, dass die besagten Verunreinigungen durch die besagte erste Vielzahl von Kanälen (60A, 60B, 60C) und die besagte zweite Vielzahl von Kanälen (70A, 70B, 70c) entlang gleicher Wege mit gleicher Strömungsgeschwindigkeit strömen und die besagten Verunreinigungen zur besagten Entleerungsvorrichtung (80; 180) durch die besagten an der besagten Mittelebene (M) angeordneten Abführungsöffnungen (66) ausgeglichen abführen, wodurch die Einleitung von Verunreinigungen in die besagte Entleerungsvorrichtung (80; 180) in vollständig äquivalenten Positionen gewährleistet ist, **dadurch gekennzeichnet, dass** die besagten Kanäle (60A, 60B, 60C, 70A, 70B, 70C) an der besagten Mittelebene (M) des besagten Hauptkörpers (42) angeordnete Abführungsöffnungen (66) aufweisen.

2. Vorrichtung (10; 110) nach Patentanspruch 1, **dadurch gekennzeichnet, dass** der besagte Drehhauptkörper (42) aus drei modularen Teilen (42A, 42B, 42C) besteht.

3. Vorrichtung (10; 110) nach Patentanspruch 1, **dadurch gekennzeichnet, dass** sie erste Drehmittel (27) zum Drehen des besagten Hauptkörpers (42) der besagten Reinigungsvorrichtung (40) umfasst.

4. Vorrichtung (10) nach Patentanspruch 1 oder 3, **dadurch gekennzeichnet, dass** die besagte Entleerungsvorrichtung (80) einen Entleerungskanal (85) umfasst, der ein drehendes Abführungselement (84), vorzugsweise eine Schnecke, unterbringt, das dazu geeignet ist, die besagten in der besagten Filterkammer (12) gesammelten Verunreinigungen aufzunehmen und entlang einer Längsrichtung zum besagten Entleerungsauslass (82) zu bewegen.

5. Vorrichtung (10) nach Patentanspruch 4, **dadurch gekennzeichnet, dass** sie zweite Drehmittel (28) zum Drehen des besagten drehenden Abführungselements (84) umfasst.

6. Vorrichtung (10) nach Patentanspruch 4 oder 5, **dadurch gekennzeichnet, dass** sich der besagte Hauptkörper (42) der besagten Reinigungsvorrichtung (40) und das besagte drehende Abführungselement (84) in der gleichen Drehrichtung drehen, wobei die Drehgeschwindigkeit des besagten drehenden Abführungselements (84) vorzugsweise um einen solchen Wert höher als die Drehgeschwindigkeit des besagten Hauptkörpers (42) ist, dass eine Tangentialkomponente der Geschwindigkeit des aus den besagten Abführungsöffnungen (66) strömenden Materials erzeugt wird, die mit der Tangentialgeschwindigkeit des besagten drehenden Abführungselements (84) übereinstimmt.

7. Vorrichtung (10; 110) nach den vorhergehenden Patentansprüchen, **dadurch gekennzeichnet, dass** ein oder mehrere Kanäle der besagten ersten Vielzahl von Kanälen (60A, 60B, 60c) und/oder der besagten zweiten Vielzahl von Kanälen (70A, 70B, 70c) einen zunehmenden Querschnitt in Richtung der besagten Entleerungsvorrichtung (80; 180) aufweisen.

8. Vorrichtung (10; 110) nach den vorhergehenden Patentansprüchen, **dadurch gekennzeichnet, dass** die besagten ersten Abstreifelemente (48) und/oder die besagten zweiten Abstreifelemente (50) Abstreifklingen, vorzugsweise flexible Abstreifklingen, umfassen, die dazu geeignet sind, in Kontakt mit der besagten ersten Filterfläche (32A) des besagten ersten Filters (32) und/oder mit der besagten zweiten Filterfläche (34A) des besagten zweiten Filters (34) angeordnet zu werden.

9. Vorrichtung (10; 110) nach Patentanspruch 8, **dadurch gekennzeichnet, dass** die besagten flexiblen Abstreifklingen (48) den besagten Drehhauptkörper (42) in einer Betriebsposition halten, die zwischen dem besagten ersten Filter (32) und dem besagten zweiten Filter (34) zentriert ist, wobei der besagte Drehhauptkörper (42) axial nicht eingeschränkt ist.

10. Vorrichtung (10; 110) nach Patentanspruch 1, **dadurch gekennzeichnet, dass** die besagte Entleerungsvorrichtung (180) einen Entleerungskanal (85) und ein Ein/Aus-Ventil (190) umfasst, das dazu geeignet ist, sich zu öffnen, um die Bewegung der besagten in der besagten Filterkammer (12) gesammelten Verunreinigungen zum besagten Entleerungsauslass (82) unter Druckeinwirkung zu ermöglichen.

11. Vorrichtung (10; 110) nach den vorhergehenden Patentansprüchen, **dadurch gekennzeichnet, dass** im Hohlkörper (14), der durch den Deckel (20) verschlossen ist, alle Abstreifelemente (48, 50) dem gleichen Verdichtungsgrad unterliegen.

## Revendications

1. Dispositif de filtration (10 ; 110) pour une matière plastique à l'état fondu, ledit dispositif de filtration (10 ; 110) comprenant :
• un corps creux (14) pourvu d'une embouchure (16) et d'un couvercle (20) destiné à être associé à ladite embouchure (16) pour définir une chambre de filtration (12) ;
• au moins une voie d'entrée (22) pour l'introduction de ladite matière plastique à l'état fondu dans ladite chambre de filtration (12) et au moins une voie de sortie (24) pour la sortie de ladite matière plastique filtrée à l'état fondu de ladite chambre de filtration (12) ;
• un premier filtre (32) et un deuxième filtre (34) disposés côte à côte à l'intérieur de ladite chambre de filtration (12) dans une position située entre ladite au moins une voie d'entrée (22) et ladite au moins une voie de sortie (24), ledit premier filtre (32) étant adapté pour définir une première surface (32A) adaptée pour filtrer ladite matière plastique et collecter d'éventuelles impuretés et ledit deuxième filtre (34) étant adapté pour définir une deuxième surface (34A) adaptée pour filtrer ladite matière plastique et collecter d'éventuelles impuretés ;
• un dispositif de nettoyage (40) disposé entre ledit premier filtre (32) et ledit deuxième filtre (34) ;
• un dispositif d'évacuation (80 ; 180) apte à évacuer lesdites impuretés collectées par ledit dispositif de nettoyage (40) vers une sortie d'évacuation (82), ledit dispositif d'évacuation (80 ; 180) étant disposé de manière centrale par rapport audit dispositif de nettoyage (40) ;
où ledit dispositif de nettoyage (40) comprend un corps principal rotatif (42) présentant un premier côté (44) tourné vers ledit premier filtre (32) et muni de premiers éléments de raclage (48) coopérant avec ladite première surface de filtration (32A) dudit premier filtre (32) et d'un deuxième côté (46) tourné vers ledit deuxième filtre (34) et muni de deuxièmes éléments de raclage (50) coopérant avec ladite deuxième surface de filtration (34A) dudit deuxième filtre (34), ledit corps principal (42) comprenant une première pluralité de canaux axialement symétriques (60A, 60B, 60C) communiquant avec ledit premier côté (44) et une deuxième pluralité de canaux axialement symétriques (70A, 70B, 70C) communiquant avec ledit deuxième côté (46) et adaptés pour recevoir les impuretés collectées par lesdits premiers éléments de raclage (48) et lesdits deuxièmes éléments de raclage (50), respectivement, et pour les acheminer vers ledit dispositif d'évacuation (80 ; 180), ladite première pluralité de canaux axialement symétriques (60A, 60B, 60C) et ladite deuxième pluralité de canaux axialement symétriques (70A, 70B, 70C) étant définis dans ledit corps principal (42) décalés les uns par rapport aux autres et disposés symétriquement par rapport au plan médian (M) dudit corps principal (42) de telle sorte que lesdites impuretés traversent ladite première pluralité de canaux (60A, 60B, 60C) et ladite deuxième pluralité de canaux (70A, 70B, 70C) le long de trajets égaux avec le même débit et évacuent lesdites impuretés de manière équilibrée vers ledit dispositif d'évacuation (80 ; 180) à travers lesdites ouvertures d'évacuation (66) disposées sur ledit plan médian (M), garantissant l'introduction d'impuretés dans ledit dispositif d'évacuation (80 ; 180) dans des positions parfaitement équivalentes, **caractérisé en ce que** lesdits canaux (60A, 60B, 60C, 70A, 70B, 70C) présentent des ouvertures d'évacuation (66) disposées sur ledit plan médian (M) dudit corps principal (42).

2. Dispositif (10 ; 110) selon la revendication 1, **caractérisé en ce que** ledit corps principal rotatif (42) est composé de trois parties modulaires (42A, 42B, 42C).

3. Dispositif (10 ; 110) selon la revendication 1, **caractérisé en ce qu'**il comprend de premiers moyens de rotation (27) destinés à faire tourner ledit corps principal (42) dudit dispositif de nettoyage (40).

4. Dispositif (10) selon la revendication 1 ou 3, **caractérisé en ce que** ledit dispositif d'évacuation (80) comprend un canal d'évacuation (85) qui loge un élément de décharge rotatif (84), de préférence une vis sans fin, adapté pour recevoir et déplacer lesdites impuretés collectées dans ladite chambre de filtration (12) dans une direction longitudinale vers ladite sortie d'évacuation (82).

5. Dispositif (10) selon la revendication 4, **caractérisé en ce qu'**il comprend de deuxièmes moyens de rotation (28) destinés à faire tourner ledit élément de décharge rotatif (84).

6. Dispositif (10) selon la revendication 4 ou 5, **caractérisé en ce que** ledit corps principal (42) dudit dispositif de nettoyage (40) et ledit élément de décharge rotatif (84) tournent dans le même sens de rotation, où la vitesse de rotation dudit élément de décharge rotatif (84) est de préférence supérieure à la vitesse de rotation dudit corps principal (42) d'une valeur telle qu'elle génère une composante tangentielle de la vitesse du matériau s'écoulant hors desdites ouvertures d'évacuation (66) qui est compatible avec la vitesse tangentielle dudit élément de décharge rotatif (84).

7. Dispositif (10 ; 110) selon les revendications précédentes, **caractérisé en ce qu'**un ou plusieurs canaux de ladite première pluralité de canaux (60A, 60B, 60C) et/ou de ladite deuxième pluralité de canaux (70A, 70B, 70C) présentent une section transversale croissante en direction dudit dispositif d'évacuation (80 ; 180).

8. Dispositif (10 ; 110) selon les revendications précédentes, **caractérisé en ce que** lesdits premiers éléments de raclage (48) et/ou lesdits deuxièmes éléments de raclage (50) comprennent des lames de raclage, de préférence des lames de raclage flexibles, adaptées pour être disposées en contact avec ladite première surface de filtration (32A) dudit premier filtre (32) et/ou avec ladite deuxième surface de filtration (34A) dudit deuxième filtre (34).

9. Dispositif (10 ; 110) selon la revendication 8, **caractérisé en ce que** lesdites lames de raclage flexibles (48) maintiennent ledit corps principal rotatif (42) dans une position de fonctionnement centrée entre ledit premier filtre (32) et ledit deuxième filtre (34), où ledit corps principal rotatif (42) n'est pas contraint axialement.

10. Dispositif (10 ; 110) selon la revendication 1, **caractérisé en ce que** ledit dispositif d'évacuation (180) comprend un canal d'évacuation (85) et une vanne on/off (190) adaptée pour s'ouvrir afin de permettre le déplacement desdites impuretés collectées dans ladite chambre de filtration (12) vers ladite sortie d'évacuation (82) sous l'action de la pression.

11. Dispositif (10 ; 110) selon les revendications précédentes, **caractérisé en ce que,** dans le corps creux (14) fermé par le couvercle (20), tous les éléments de raclage (48, 50) sont soumis au même degré de compression.
